# EUROPÄISCHE PATENTSCHRIFT

(11) **EP 0 991 894 B1**
(45) Veröffentlichungstag und Bekanntmachung des Hinweises auf die Patenterteilung: **26.09.2001**
(21) Anmeldenummer: 98938615.6
(22) Anmeldetag: 19.06.1998
(51) Int. Cl.: F16L 59/06

(54) **KOMBINIERTES VAKUUMISOLIERPANEEL AUS POLYSTYROL UND POLYURETHAN SOWIE DESSEN VERWENDUNG BEI DER HERSTELLUNG VON DÄMMELEMENTEN**
COMBINED POLYSTYRENE AND POLYURETHANE VACUUM INSULATING PANEL AND THE USE THEREOF FOR PRODUCING INSULATING ELEMENTS
PANNEAU D'ISOLATION A VIDE COMBINE EN POLYSTYROL ET POLYURETHANE AINSI QUE SON UTILISATION POUR LA PRODUCTION D'ELEMENTS D'ISOLATION

(30) Priorität: 24.06.1997 DE 19726732
(43) Veröffentlichungstag der Anmeldung: 12.04.2000
(73) Patentinhaber: Bayer Aktiengesellschaft, 51368 Leverkusen (DE)
(72) Erfinder: DIETRICH, Karl, Werner, D-51519 Odenthal (DE)
(86) Internationale Anmeldenummer: EP9803743
(87) Internationale Veröffentlichungsnummer: WO9859194

(56) Entgegenhaltungen:
- WO-A-96/14207
- GB-A- 2 286 234
- US-A- 5 273 801

## Beschreibung

Die Erfindung betrifft ein aus einer Polyurethan- und Polystyrolplatte kombiniertes Vakuumisolierpaneel sowie dessen Verwendung bei der Herstellung von Dämmelementen, wie sie z.B. als Außenwände in Kühlgeräten eingesetzt werden.

Es ist bekannt, Vakuumisolierpaneele aus einem porösen Material und einer allseitig umhüllenden gasdichten Folie herzustellen, wobei der durch das poröse Material gebildete "Hohlraum" evakuiert wird. Das poröse Material kann entweder aus einem porigen Schüttgut oder aber aus einem harten Schaumstoff bestehen. Die Folie besteht üblicherweise aus Kombinationen von mehreren Schichten, wobei durch die verschiedenen Schichten unterschiedliche Aufgaben, wie Diffusionssperre gegenüber verschiedenen Gasen und mechanische Verfestigung, gelöst werden.

Vakuumisolierpaneele besitzen als Dämmstoff hohes Interesse, insbesondere in der Kältegeräte-Industrie.

Als Vakuumisolierpaneele sind insbesondere von Interesse: offenporige Schaumstoffe wie z.B. Polyurethan- und Polystyrol-Schaumstoffe sowie deren zur Platte gebundenen Zerkleinerungsprodukte wie sie z.B. in der WO 96/14207 beschrieben sind.

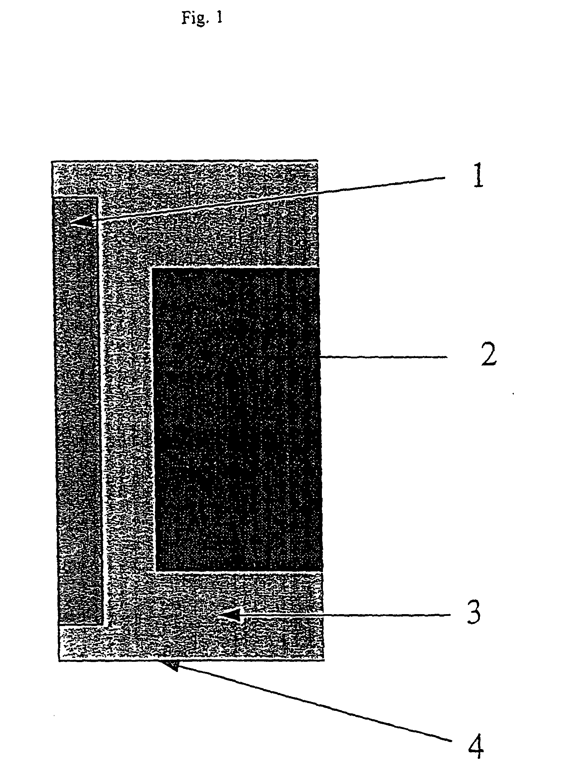

Normalerweise werden die Vakuumisolierpaneele dergestalt mit Polyurethan-Hartschaum kombiniert, daß die Vakuumisolierpaneele einseitig auf einer Deckschicht, z.B. dem Außenblech eines Kältegerätes aufgeklebt werden und der verbleibende Hohlraum mit Polyurethan-Hartschaum ausgeschäumt wird (vgl. Fig. 1).

Hierbei treten - insbesondere bei großen Schäumdicken - Temperaturen von bis zu 180°C auf. An der dem Schaum zugewandten Seite des Vakuumisolierpaneels können hierbei Temperaturen von bis zu 150°C auftreten. Derartige Temperaturen liegen oberhalb der Wärmebeständigkeit der verwendeten Hüllfolien; auch Polystyrol-Schaumstoff als Vakuumisolierpaneel-Füllmaterial wird bei solchen Temperaturen angeschmolzen. Dabei ist gerade der offenporige, mikrozelluläre Polystyrol-Schaumstoff als Füllmaterial für Vakuumisolierpaneele dämmtechnisch besonders interessant.

Aufgabe der vorliegenden Erfindung war es daher, den Einsatz von temperatursensiblen Polystyrol-Platten in Kombination mit Polyurethan-Schaumstoff als Dämmmaterial zu ermöglichen.

Überraschenderweise wurde nun gefunden, daß man Schaumtemperatur-beständige Kombinations-Vakuumisolierpaneele erhält, wenn man den offenporigen Polystyrol-Schaumstoff mit einer Schicht offenporigem Polyurethan-Schaumstoff bedeckt und anschließend mit Folie umhüllt, evakuiert und versiegelt. Wird dieses Kombinationselement so eingebaut, daß die Polystyrol-Seite der äußeren Deckschicht und die Polyurethan-Seite dem den verbleibenden Hohlraum ausfüllenden Schaum zugewandt ist, so übersteht es den Schäumprozeß bei der Herstellung eines Dämmelements unbeschadet.

Besonders überraschend ist, daß auch die Oberflächentemperatur des Vakuumisolierpaneels auf der auszuschäumenden Seite abgesenkt wird, wenn im Vakuumisolierpaneel ein Polyurethan-Schaum der Dichte über 50 kg/m² oder eine aus zerkleinertem Hartschaum gebundene Platte wie in der WO 96/14207 offenbart, verwendet wird.

Gegenstand der vorliegenden Erfindung ist somit ein Vakuumisolierpaneel bestehend aus
a) zwei flächig aufeinander gelegten Schaumstoffplatten, wobei die eine Platte aus offenporigem Polystyrol-Schaumstoff und die andere Platte aus offenporigem Polyurethan-Schaumstoff besteht,
b) einer beide Platten umhüllenden Folie, die evakuiert und gasdicht versiegelt wurde.

Beide Platten werden üblicherweise bei der Herstellung nur lose aufeinandergelegt, da durch die Folienumhüllung und anschließender Evakuierung die mechanische Stabilität des erfindungsgemäßen Vakuumisolierpanells gegeben ist, so daß ein Verkleben beider Platten nicht erforderlich ist. Sie können aber auch verklebt oder punktuell bzw. streifenförmig aneinander geheftet werden.

Die Polystyrol-Platte besteht aus offenzelligem z.B. extrudiertem Polystyrol-Schaum der Dichte 20 bis 60 kg/m³, bevorzugt 25 bis 45 kg/m³. Die mittlere Zellgröße beträgt vorzugsweise ≤50µm.

Die Polyurethan-Platte kann aus einem offenzelligen, bevorzugt mikrozellulärem Polyurethan-Schaumstoff der Dichte >50 kg/m³, vorzugsweise >80 kg/m³, z.B. 80 bis 200 kg/m³ bestehen.

Bevorzugt wird als Polyurethan-Platte eine aus Polyurethan-Hartschaummehl gebundene Platte, wie sie in der WO 96/14207 beschrieben wird, eingesetzt. Hier liegt die Dichte der Polyurethan-Platte bei 100 bis 350 kg/m³, vorzugsweise 150 bis 250 kg/m³. Weiterhin bevorzugt ist bei Einsatz einer aus Polyurethan-Hartschaummehl gebundenen Platte, wobei
- das Polyurethan-Hartschaummehl ein Recycling-Material, vorzugsweise ein Polyurethan-Hartschaumstoffmehl, aus dem Recycling-Prozeß alter Kühlgeräte ist,
- das Polyurethan-Schaumstoffpulver bzw. -Schaumstofflocken eine Teilchengröße von 0,01 bis 5 mm, vorzugsweise 0,1 bis 2 mm, besonders bevorzugt 0,1 bis 1 mm, haben,
- das zur Herstellung der Polyurethanplatte verwendete Bindemittel ein Di- oder Polyisocyanat ist, (vorzugsweise Gemische von Diphenylmethandiisocyanaten und Polyphenyl-polymethylen-polyisocyanaten) ist.

Für das erfindungsgemäß hergestellte Vakuumpaneel kommen alle bekannten gasdichten Folien, z.B. Kombinationsfolien, wie sie auch bei der Herstellung von handelsüblichen Vakuumpaneelen nach dem bisherigen Stand der Technik verwendet werden, in Betracht. Beispielhaft seien genannt: Kombination von Polyethylenfolie mit Polyvinylalkoholfolie, Polyethylenfolie mit Aluminiumfolie und gegebenenfalls Polyesteroder Polyesteramidfolie. Bevorzugt sind mehrschichtige Folien, bei denen eine Schicht eine Aluminiumfolie ist. Besonders bevorzugt weisen die Aluminiumfolien eine Dicke zwischen 5 bis 9 µm auf.

Die Schaumstoffplatten können vor dem Umhüllen mit Folie und Evakuieren auf Gerung geschnitten werden, oder für die Montage von Schaltern, Leitungen oder Kanälen können entsprechende Vertiefungen herausgefräst werden.

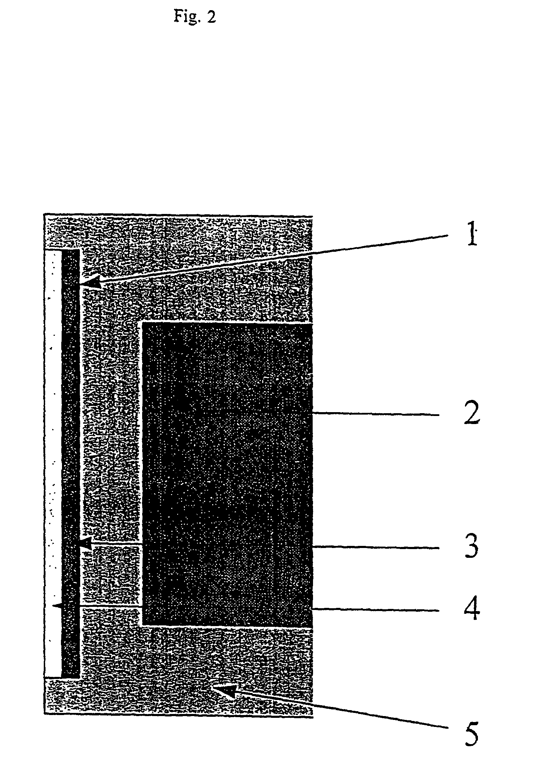

Ein weiterer Gegenstand der Erfindung ist die Verwendung der vorstehend beschriebenen Vakuumisolierpaneele bei der Herstellung von Dämmelementen aus Polyurethan-Kunststoff, wie sie z.B. als Bauelemente für Kühlgeräte, insbesondere Kühlschränke oder Kühltruhen, eingesetzt werden. Das Vakuumisolierpaneel wird dabei in das Dämmelement so eingebaut, daß die Polystyrolseite der Außenseite und die Polyurethanseite den das Rest-Dämmvolumen ausfüllenden Polyurethanschaum des Dämmelements zugewandt ist. Eine derartige Anordnung ist zur besseren Erläuterung in Fig. 2 dargestellt.

Die folgenden Beispiele sollen die Erfindung näher erläutern ohne sie jedoch in ihrem Umfang zu begrenzen.

### Figuren

**Fig.1** Dämmelement für ein Kühlgerät mit einem Polyurethan-Vakuumisolierpaneel nach dem Stand der Technik
   Es bedeuten: 1: Vakuumisolierpaneel
   2: Innenbehälter Kältegerät
   3: der das Restvolumen ausschäumende Polyurethan-Schaum
   4: Außenwand Kältegerät
**Fig. 2** Dämmelement für ein Kühlgerät mit einem erfindungsgemäßen Vakuumisolierpaneel
   Es bedeuten: 1: Kühlfolie Vakuumisolierpaneel
   2: Innenbehälter Kühlgerät
   3: Platte aus offenporigem Polyurethan-Schaum
   4: Platte aus offenporigem Polystyrol-Schaum
   5: der das Restvolumen ausschäumende Polyurethan-Schaum
**Fig. 3** Erläuterung Beispiel 2
**Fig. 4** Erläuterung Beispiel 4

### Beispiele

### Vergleichsbeispiel 1

Ein Hohlraum der Maße 500 x 800 x 70 mm wird mit einem Polyurethan-Hartschaum der Rohdichte 35 kg/m³, wie er für die Ausschäumung von Kältegeräten marktüblich ist, ausgeschäumt. Im Kern wird während des Ausschäumens eine Maximaltemperatur von 170°C gemessen.

### Vergleichsbeispiel 2

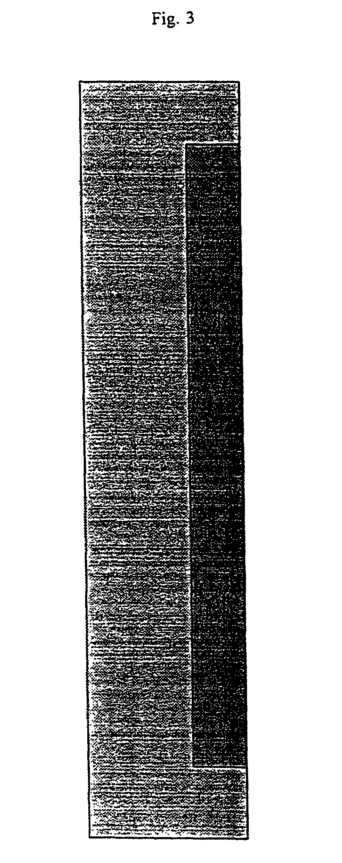

Es wird zentrisch ein Vakuumisolierpaneel aus offenporigem PU-Hartschaum (Dichte: 40 kg/m³) der Maße 600 x 400 x 30 mm in ein Dämmelement für einen Kühlschrank (Seitenwand) derart eingelegt, daß es an der unteren Deckschicht fixiert wird (Fig. 3). Der verbleibende Hohlraum wird mit PU-Hartschaum wie in Beispiel 1 ausgeschäumt. An der dem Schaum zugewandten Seite der Folienoberfläche werden während des Schäumvorganges Temperaturen von 120 bis 140°C gemessen.

### Vergleichsbeispiel 3

Wie in Beispiel 2 wird ein Vakuumisolierpaneel mit offenporigem Polystyrolschaum als Füllmaterial eingelegt. Durch die Schäumtemperatur wird die Kernschicht ca. 5 bis 10 mm geschädigt/komprimiert.

### Erfindungsgemäßes Beispiel 4

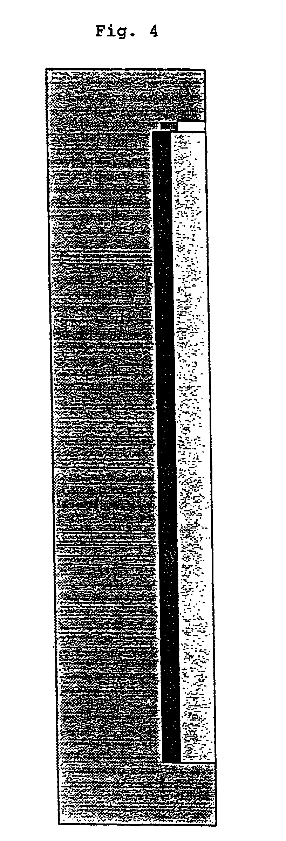

a) Herstellung der Polyurethan-Platte
   580 g eines PUR-Hartschaummehles aus einer Kühlgeräterecyclinganlage werden mit 20 g Wasser und 58 g eines Polyisocyanatgemisches von Diphenylmethandiisocyanaten und Polyphenylpolymethylen-polyisocyanaten (Desmodur® VP PU 1520 A20; Bayer AG) mit einem Lödige-Pflugschar-Mischer mit 2-Stoffdüsen gleichmäßig vermischt. Aus dieser Mischung wird in einem Form-Rahmen ein Formling von 600 x 400 mm gebildet, gleichmäßig verdichtet und anschließend in einer Laborpresse unter Druck von 5 bar und einer Temperatur von 120°C 8 Minuten unter Verwendung eines Zeit-Meßprogrammes auf 20 mm verpreßt.
   Man erhält hieraus eine poröse 20 mm dicke Platte mit einer Rohdichte von 200 kg/m³. Die Platte wird ca. 2 h auf 120°C erwärmt, um sie von allen flüchtigen Bestandteilen zu befreien.
b) Herstellung des kombinierten Vakuumisolierpaneels aus Polystyrol- und Polyurethan-Schaumstoff
   Eine Platte aus offenporigem Polystyrol (600 x 400 x 20 mm) wird flächig auf die gemäß a) hergestellte Polyurethan-Platte gelegt und mit einer Folie bestehend aus den Schichten Polyethylen/Polyvinylalkohol/Polyethylen umhüllt und auf 0,5 mbar evakuiert. Unter Vakuum werden die Kanten der Folie verschweißt.
c) Einbau des Vakuumisolierpaneels in ein Dämmelement für einen Kühlschrank
   In ein Dämmelement für einen Kühlschrank (Seitenwand) wird ein erfindungsgemäßes Vakuumisolierpaneel so eingelegt, daß die Polyurethan-Seite des Paneels der mit Polyurethan-Hartschaum ausgeschäumten Seite zugewandt ist (Fig. 4). An der Folienoberfläche des Paneels werden Temperaturen von 80 bis 90°C gemessen.

## Patentansprüche

1. Vakuumisolierpaneel, bestehend aus
a) zwei flächig aufeinandergelegten Schaumstoffplatten, wobei die eine Platte aus offenporigem Polystyrol-Schaumstoff und die andere Platte aus offenporigem Polyurethan-Schaumstoff besteht,
b) einer beide Platten umhüllenden Folie, die evakuiert und gasdicht versiegelt wurde.

2. Vakuumisolierpaneel nach Anspruch 1, **dadurch gekennzeichnet, daß** die Polystyrol-Platte eine Dichte im Bereich von 20 bis 60 kg/m³ aufweist.

3. Vakuumisolierpaneel nach Anspruch 1 oder 2, **dadurch gekennzeichnet, daß** die Polyurethan-Platte eine Dichte >50 kg/m³ aufweist.

4. Vakuumisolierpaneel nach Anspruch 1 oder 2, **dadurch gekennzeichnet, daß** die Polyurethan-Platte aus gebundenem Polyurethan-Hartschaummehl mit einer Dichte im Bereich von 100 bis 350 kg/m³ besteht.

5. Vakuumisolierpaneel nach einem der Ansprüche 1 bis 4, **dadurch gekennzeichnet, daß** die umhüllende Folie eine mehrschichtige Folie ist.

6. Verwendung eines Vakuumisolierpaneels gemäß einem der Ansprüche 1 bis 5 bei der Herstellung eines Polyurethan-Schaumstoff enthaltenden Dämmelements.

7. Verwendung eines Vakuumisolierpaneels nach einem der Ansprüche 1 bis 5 bei der Herstellung eines Polyurethan-Schaumstoff enthaltenden Dämmelements, **dadurch gekennzeichnet, daß** das Vakuumisolierpaneel in das Dämmelement so eingebaut wird, daß die Polystyrolseite des Vakuumisolierpaneels der Außenseite und die Polyurethanseite den das Rest-Dämmvolumen ausfüllenden Polyurethan-schaum des Dämmelements zugewandt ist.

## Claims

1. Vacuum insulating panel, consisting of
a) two foam sheets laid flat on top of one another, one sheet consisting of open-pored polystyrene foam and the other sheet consisting of open-pored polyurethane foam,
b) a film covering both sheets, which has been evacuated and sealed with a gas-tight seal.

2. Vacuum insulating panel according to claim 1,
**characterised in that** the polystyrene sheet has a density within the range of 20 to 60 kg/m³.

3. Vacuum insulating panel according to claim 1 or 2,
**characterised in that** the polyurethane sheet has a density of >50 kg/m³.

4. Vacuum insulating panel according to claim 1 or 2,
**characterised in that** the polyurethane sheet consists of particles of rigid polyurethane foam bound together, having a density within the range of 100 to 350 kg/m³.

5. Vacuum insulating panel according to one of claims 1 to 4, **characterised in that** the covering film is a multilayered film.

6. Use of a vacuum insulating panel according to one of claims 1 to 5 in the production of an insulating element containing a polyurethane foam.

7. Use of a vacuum insulating panel according to one of claims 1 to 5 in the production of an insulating element containing a polyurethane foam, **characterised in that** the vacuum insulating panel is incorporated into the insulating element in such a way that the polystyrene side of the vacuum insulating panel is nearer to the outside and the polyurethane side is nearer to the polyurethane foam which is contained in the insulating element and fills out the remainder of the insulating volume.

## Revendications

1. Panneau d'isolation à vide consistant en
a) deux plaques de mousse appliquées l'une contre l'autre suivant la surface, une plaque consistant en mousse de polystyrène à pores ouverts et l'autre plaque consistant en mousse de polyuréthane à pores ouverts,
b) une feuille enveloppant les deux plaques, qui a été mise sous vide et scellée d'une manière étanche aux gaz.

2. Panneau d'isolation à vide selon la revendication 1, **caractérisé en ce que** la plaque de polystyrène présente une masse volumique située dans le domaine de 20 à 60 kg/m³.

3. Panneau d'isolation à vide selon la revendication 1 ou 2, **caractérisé en ce que** la plaque de polyuréthane présente une masse volumique > 50 kg/m³.

4. Panneau d'isolation à vide selon la revendication 1 ou 2, **caractérisé en ce que** la plaque de polyuréthane consiste en poudre de mousse dure de polyuréthane liée avec une masse volumique dans le domaine de 100 à 350 kg/m³.

5. Panneau d'isolation à vide selon l'une des revendications 1 à 4, **caractérisé en ce que** la feuille enveloppante est une feuille multicouche.

6. Utilisation d'un panneau d'isolation à vide selon l'une des revendications 1 à 5 lors de la fabrication d'un élément isolant contenant une mousse de polyuréthane.

7. Utilisation d'un panneau d'isolation à vide selon l'une des revendications 1 à 5 lors de la fabrication d'un élément isolant contenant une mousse de polyuréthane **caractérisée en ce que** le panneau d'isolation à vide est incorporé dans l'élément isolant de manière que le côté polystyrène du panneau d'isolation à vide soit tourné vers le côté externe et que le côté polyuréthane soit tourné vers la mousse de polyuréthane de l'élément isolant qui remplit le volume isolant résiduel.
